## Europäisches Patentamt

## European Patent Office

## Office européen des brevets

(19)

(11) Publication number: **0 178 010**
**B1**

(12) **EUROPEAN PATENT SPECIFICATION**

(45) Date of publication of patent specification: **11.05.88**

(51) Int. Cl.⁴: **B 60 R 11/02**

(21) Application number: **85201556.9**

(22) Date of filing: **27.09.85**

(54) **Car radio with circuit board irremovably fixed inside the facia.**

(30) Priority: **01.10.84 IT 2341184 u**

(43) Date of publication of application:
**16.04.86 Bulletin 86/16**

(45) Publication of the grant of the patent:
**11.05.88 Bulletin 88/19**

(84) Designated Contracting States:
**DE FR GB SE**

(56) References cited:
**EP-A-0 116 780**
**GB-A-2 116 800**

**FUNK SCHAU, vol. 49, no. 16, June 1977, page
718; "Autoempfänger mit getrenntem
Bedienteil"**

(73) Proprietor: **Viezzoli, Franco**
**Via Tito Livio 176**
**I-00136 Rome (IT)**

(72) Inventor: **Viezzoli, Franco**
**Via Tito Livio 176**
**I-00136 Rome (IT)**

(74) Representative: **De Carli, Erberto et al**
**ING. BARZANO' & ZANARDO MILANO S.p.A. Via
Borgonuovo, 10**
**I-20121 Milano (IT)**

Courier Press, Leamington Spa, England.

## Description

The present invention relates to a car radio, in particular for being positioned on the facia of a car, comprising a control device and a circuit equipment electrically connected to each other, said circuit equipment being constrained to an inner wall of said facia.

Radio sets are known, more simply denominated car radios, which are introduced and positioned within suitable cavities in the facia of the vehicle.

Car radios of this type are liable to be stolen in an extremely easy way by removing them from the cavity wherein they are housed, sometimes causing, in addition to the damage by the theft, the breaking of the facia.

In order to obviate the frequent thefts allowed by such a positioning, extractable and/or removable car radios have been realized, in order to enable the owner or the user of the vehicle to withdraw and carry with himself the car radio during the periods during which the motor vehicle remains unattended. Such a procedure involves the inconvenience of the withdrawal of the car radio and of the carrying of the same during the walking far from the motor vehicle.

Moreover, positioning plates or supports for positioning the car radio inside the vehicle need to be provided, with an increase of the production and installation costs.

From EP—A—0 116 780 and FUNKSCHAU 1977, Vol. 49, No. 16 of June 1977, page 718, car radios and like audio systems are known which are positioned on a facia of a car and comprise a control device and a circuit equipment electrically connected to each other, wherein the circuit equipment is constrained to an inner wall of the facia and the control device is removably attached to a front portion of the facia.

In such constructions, the circuit equipment is contained in a housing which is securely mounted to the inner wall of the facia by suitable fastening means, and the control device is removable by the user when the vehicle is left unattended. The circuit equipment which remains in the vehicle is not only difficult to be removed without damaging the facia, but is also unattractive for a thief because useless without the control device. Thus, such constructions allow better security against thefts.

However, the mounting of the circuit equipment in a proper housing within the facia by suitable fastening means such as to prevent removal of the equipment requires complex operations and additional costs.

Purpose of the present invention is to provide a radio set for motor vehicles in general, which allows the problems of thefts to be eliminated, whose realization is at all simple and cheap, and which can be easily positioned within any free portion of the facia.

Such purpose, according to the present invention, is reached by providing a car radio of the type initially specified, characterized in that said circuit equipment is irremovable from and moulded as a single piece with said inner wall.

In a construction according to the present invention the circuit equipment is therefore totally irremovable from the facia and its secure arrangement is obtainable economically.

Functional and Structural characteristics and advantages of a car radio according to the present invention will be better understood from the following exemplifying and not limitative disclosure related to the attached schematic drawings, wherein:

Fig. 1 is a perspective view, partly in section, of a car radio according to the present invention positioned on the facia of a motor car, and

Fig. 2 is a further example of a car radio positioned according to the invention.

Referring to the drawings, in a facia 11 of a motor car, partly shown, a car radio is positioned essentially formed by a control device 12 and by an electrical and/or electronic circuit equipment 13 which embodies a radiophonic group, electrically connected to each other. More precisely, the control device 12, positioned on the facia 11, comprises e.g. control or frequency search knobs and switches 14 for switching on and frequency change, at least a frequency graduated scale 15, indicator means 16, e.g. of the LED type, of the selected frequency, a magnetic tape cassette playback element (not shown) and other accessories.

The circuit equipment 13, constrained to an inner wall 18 of the facia 11, results to be essentially formed by a board 17 supporting electrical and electronic elements composing the radiophonic circuit.

Said equipment may be a printed circuit board with related accessories.

The equipment is irremovable from and moulded as a single piece with the inner wall 18 of the facia 11.

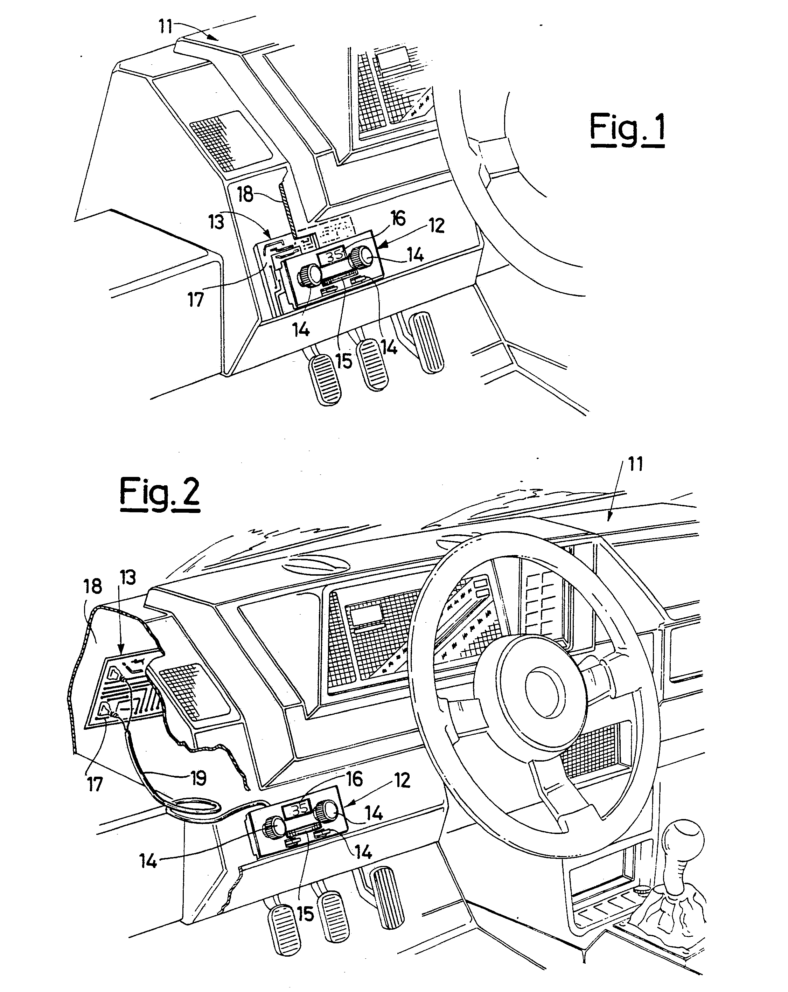

A car radio according to the invention manufactured in at least two distinct portions allows moreover the circuit equipment 13 to be positioned not only on the inner wall 18 of the facia 11 under the control device (Fig. 1), but also on a more far inner wall 18, connecting through at least one multipolar cable 19 the same equipment to the control device 12.

## Claims

1. Car radio, in particular for being positioned on the facia (11) of a car, comprising a control device (12) and a circuit equipment (13) electrically connected (19) to each other, said circuit equipment (13) being constrained to an inner wall (18) of said facia (11), characterized in that said circuit equipment (13) is irremovable from and moulded as a single piece with said inner wall (18).

2. Car radio as claimed in claim 1, characterized in that said circuit equipment (13) is a printed circuit board with related accessories.

3. Car radio as claimed in claim 1, characterized in that said circuit equipment (13), positioned in any point of the inner wall (18) of said facia (11), is connected to said control device (12) through at least one multipolar cable (19).

4. Car radio as claimed in claim 1, characterized in that said control device comprises control switches (14), frequency indicators (16), frequency search knobs.

5. Car radio as claimed in claim 1, characterized in that said control device comprises a magnetic tape cassette player.

**Patentansprüche**

1. Autoradio, insbesondere zur Anordnung am Armaturenbrett (11) eines Autos, mit einer Steuervorrichtung (12) und einer Schalteinrichtung (13), die miteinander elektrisch verbunden sind (19) wobei die Schalteinrichtung (13) an einer Innenwand (18) des Armaturenbrettes (11) befestigt ist, dadurch gekennzeichnet, dass die Schalteinrichtung (13) mit der Innenwand (18) einteilig geformt ist und von derselben nicht abgenommen werden kann.

2. Autoradio nach Anspruch 1, dadurch gekennzeichnet, dass die Schalteinrichtung (13) ein gedruckter Schaltkreis mit dem entsprechenden Zubehör ist.

3. Autoradio nach Anspruch 1, dadurch gekennzeichnet, dass der an irgendeiner Stelle der Innenwand (18) des Armaturenbrettes (11) angeordnete Schaltkreis (13) über wenigstens ein Mehrleiterkabel (19) mit der Steuervorrichtung (12) verbunden ist.

4. Autoradio nach Anspruch 1, dadurch gekennzeichnet, dass die Steuervorrichtung Bedienungsschalter (14), Frequenzanzeiger (16) und Frequenzsuchknöpfe umfasst.

5. Autoradio nach Anspruch 1, dadurch gekennzeichnet, dass dass die Steuervorrichtung einen Magnetband-Kassettenspieler umfasst.

**Revendications**

1. Autoradio destiné, en particulier, à être placé dans le tableau de bord (11) d'une automobile, comprenant un appareil de commande (12) et une partie circuits (13) reliés l'un à l'autre électriquement (19), ladite partie circuits (13) étant encastrée dans une paroi interne (18) dudit tableau de bord (11), caractérisé en ce que ladite partie circuits est inamovible et moulée d'une seule pièce avec ladite paroi interne (18).

2. Autoradio suivant la revendication 1, caractérisé en ce que ladite partie circuits (13) est un circuit imprimé avec ses accesoires correspondants.

3. Autoradio suivant la revendication 1, caractérisé en ce que ladite partie circuits (13), placée en un endroit quelconque de la paroi interne (18) dudit tableau de bord (11), est reliée audit appareil de commande par au moins un câble multipolaire (19).

4. Autoradio suivant la revendication 1, caractérisé en ce que ledit appareil de commande comprend des boutons de commande (14), des indicateurs de fréquence (16), des boutons de recherche de fréquence.

5. Autoradio suivant la revendication 1, caractérisé en ce que ledit appareil de commande comprend un lecteur de cassette à bande magnétique.

Fig.1

Fig.2